Europäisches Patentamt

European Patent Office

Office européen des brevets

(19)

(11) Publication number: **0 083 809**
**B1**

# EUROPEAN PATENT SPECIFICATION

(45) Date of publication of patent specification: **04.02.87**

(21) Application number: **82201249.8**

(22) Date of filing: **07.10.82**

(51) Int. Cl.⁴: **H 02 G 3/06**

(54) Raceway.

(30) Priority: **13.01.82 NL 8200119**

(43) Date of publication of application:
**20.07.83 Bulletin 83/29**

(45) Publication of the grant of the patent:
**04.02.87 Bulletin 87/06**

(84) Designated Contracting States:
**AT BE CH DE FR GB IT LI LU NL SE**

(56) References cited:
**DE-A-3 139 287**
**NL-A-7 412 503**
**NL-A-7 808 478**
**US-A-3 329 763**
**US-A-4 114 247**

(73) Proprietor: **METAALWARENFABRIEK VAN GEEL B.V.**
**Van Salmstraat 76**
**NL-5281 RS Boxtel (NL)**

(72) Inventor: **Van Geel, Josephus Johannes**
**Molenweide 1**
**NL-5281 JX Boxtel (NL)**

(74) Representative: **Hoorweg, Petrus Nicolaas et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a raceway for cables, ducts or the like, comprising an assembly of abutting elements, each element having at least one bottom panel and upright sidewalls adjoining said bottom panel on both sides and having each integrated fastening means, and one or more connecting members adapted to be snapped inside said element.

A raceway of the kind set forth is disclosed in the US—A—3 329 763. The raceway as described in said disclosure comprises channel-like elements, which can be connected to each other by means of a connecting member, being substantially U-shaped. Although the connecting member is made of resilient plate material it will still be difficult to snap the connecting plate in the channel-like elements and to obtain a rigid assembly of elements. Moreover one limb of the U-shaped connecting member does not extend close to the side wall of the channel-like element, which also diminishes a rigid structure of the assembly, whereby cables laid down in the raceway can be easily damaged.

The invention has for its object to improve a raceway of the kind set forth in the preamble to an extent such that mounting, extension and assembling the elements can be carried out in a simple manner without the need for tools in the field, whilst there is no need for close tolerances in dimension, which is particularly important in mounting raceways in buildings in the rough state.

The raceway embodying the invention is distinguished in that the bottom panel is provided with at least one stop member located at a chosen distance from a side wall, said connecting member being formed by an L-shaped blade, such that said connecting member engages said fastening means of the side wall and the stop member in the bottom panel, one limb of the connecting member extending along the side wall, the other limb extending along the bottom panel.

Thanks to said L-shaped connecting member the raceway elements can be interconnected very easily but very rigid, whilst also other elements such as consoles, terminal pieces and the like can be fastened to the raceway elements in the same quick and rigid way, without additional fastening means such as bolts, pins or tags.

In a further embodiment one limb of the L-shaped connecting member is bent complementary to the upper edge of the side wall, so that at the joints being adjacent elements the upper edges are aligned to each other, which contributes to the strength of the raceway, because the upper edge is frequently an essential factor in the rigidity of the raceway. Moreover a movement of the raceway elements with respect to each other is essentially avoided and the electric conductivity over the joints is enhanced as well.

It is noted that a connecting element engaging a bent over edge and a continuous stop member in a panel like element is disclosed in US—A—4 114 247. The said connecting member is part of a adjoining panel-like element, but here is no need for adjoining elements in length-wise direction. In order to obtain a self bearing structure.

In one embodiment the upper edges of the sidewalls of the raceway element are inwardly bent-over at an acute angle to the side wall and the edge of one limb of the L-shaped connecting members is provided with a tag bent out of its plane and penetrating into the acute angle, wherein it is clamped.

In certain embodiments it may be preferred to provide one limb of the L-shaped connecting member with one or more stiffening ribs parallel to the other limb. This also contributes to an improved transfer of forces via the sidewall of the raceway.

In order to improve the fixation of the connecting member behind the stop member the other limb of the connecting member is kinked. Dismounting of the connectinv member can, moreover, be more easily carried out because a space is left below the other limb and the bottom panel, into which a tool, for example, a screw driver, can be inserted.

The stop member is preferably constructed in the form of a continuous ridge bent out of the bottom panel. Other continuous deformations may be used as well. A continuous form permits of disposing the connecting member at an arbitrary area so that accuracy to size need no longer be observed.

The invention will be described more fully with reference to the drawing of a few embodiments.

Fig. 1 is a perspective plan view of part of a raceway, said part being the welding junction between two raceway elements.

Fig. 2 is a cross-sectional view of the raceway of Fig. 1.

Fig. 3 and 4 a perspective plan view of part of a raceway element having differently constructed stop members.

Figs. 5 and 6 a perspective view of part of a raceway having a connecting member of an alternative construction.

Figs. 7 and 8 a perspective plan view of a raceway provided with a connecting member for fastening welding boxes or, respectively raceway to a wall.

Fig. 9 is a view corresponding with that of Fig. 8 of a raceway having a different mode of fastening.

Fig. 10 shows a connecting member as a fastening means in a different embodiment.

Fig. 11 is a perspective view of a raceway element having an upper rim inwardly bent over at an acute angle.

Fig. 12 is a perspective view of a raceway element having continuous holes for fastening in the sidewall receiving a further form of the connecting member.

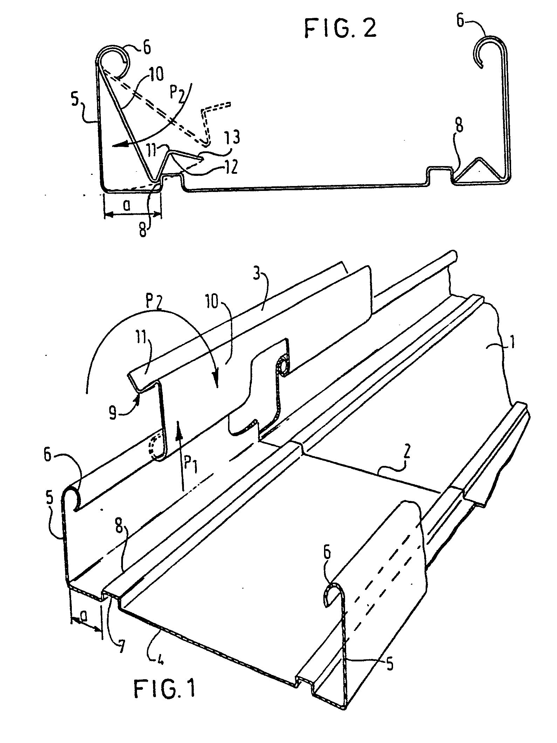

Fig. 1 shows that the raceway comprises a plurality of gutter-shaped elements 1 which have to be connected with one another at the joint 2.

To this end the invention provides a connecting member 3, which will be discussed in detail hereinafter.

Each gutter-shaped element 1 comprises a bottom panel 4 and two standing sidewalls 5 adjoining the side edges thereof and having each an inwardly bent over peripheral strip 6 at the free upper edge as fastening means.

The bottom panel 4 has a ridge 7 bent upwardly out of said panel and extending parallel to the sidewalls 5 at a distance $a$ therefrom.

The ridge 7 is constituted by the upright peripheral strip 8 facing the sidewall 5 a stop spaced apart by the distance $a$ from said sidewall 5.

The connecting member 9 according to the invention has the form of a substantially L-shaped plate (see Fig. 1 and 2) the long limb 10 of which extends up to the sidewall 5 and the upper rim of which is bent in the same manner as the upper rim 6 of the sidewall. In this construction the short limb 11 is slightly kinked at 12 so that the free end edge 13 will be located approximately at a distance $a$ from the long limb 10 of the L-shaped member.

Mounting of the connecting member 9 can be carried out in a particularly simple manner by first disposing the gutter-shaped elements 1 in contact with one another at their head edges 2 and arranging the flanged rim of the long limb 10 in the directon of the arrow P1 in the flanged rim of the sidewall 5 as is illustrated in Fig. 1. Subsequently the member can be turned in the direction of the arrow P2 until the position shown in the left-hand part of Fig. 2 is attained. The corner of the L gets behind the upper rim of the side 8 of the ridge 7, after which the member 9 can be further turned in the direction of the arrow P2 until the position shown in the right-hand part of Fig. 2 is attained. It is apparent that the L-shaped connecting member is retained with close fit behind the stop formed by the side 8 and in the bent-over rim 6. The length of the member 9 is not defined provided it is sufficient to transfer the load from one gutter-shaped element 1 to the neighbouring one.

Disengagement of the L-shaped member can be performed in a simple manner by placing a screw driver or the like below the kink 11 of the short limb and lifting up said limb. In a first instance the corner of the L remains behind the side 8 so that even in the event of unexpected, abrupt disengagement additional safety is guaranteed.

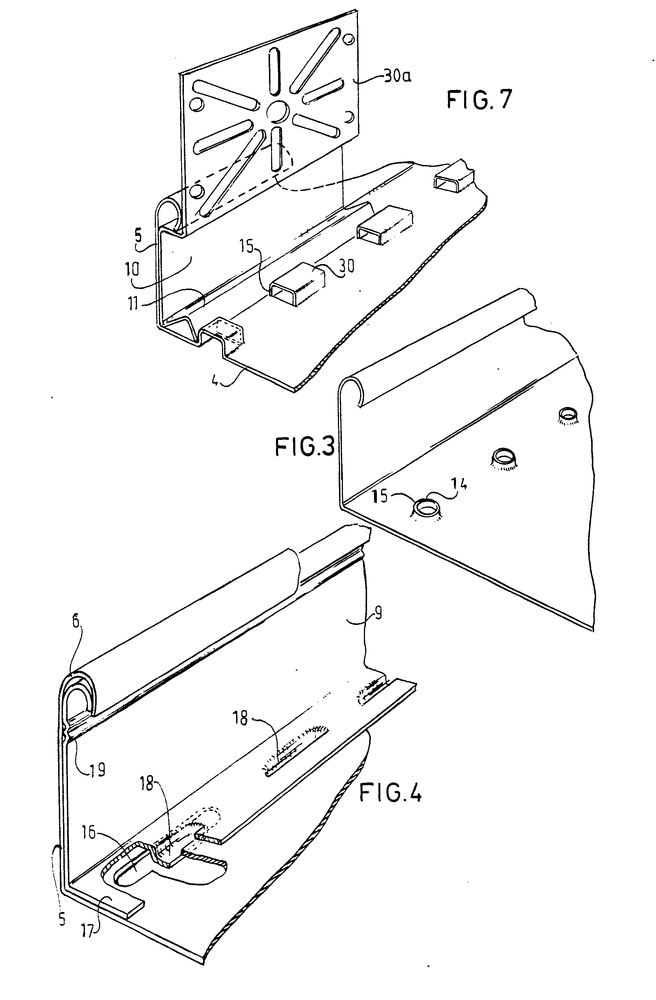

Figs. 3 and 4 shows alternative forms, in particular, of the stops on or in the bottom panel 4 of the gutter-shaped elements. Referring to Fig. 3 the stop is formed by a sequence of short embossed parts 14 on the side 15 facing the sidewall 5 where the other limb of the connecting member will be located.

Fig. 4 shows large elongate holes 16, the edge 17 remote from the sidewall 5 forming the stop member. The short limb of the connecting member 9 has embossed parts 18 having a corresponding pitch but a smaller width, these parts 18 exerting pressure on the edge of the holes 16 when the member 9 is inserted. A rib 19 in the long limb may operate as a hinge by which inaccuracies of the size of the rim 6 can be compensated.

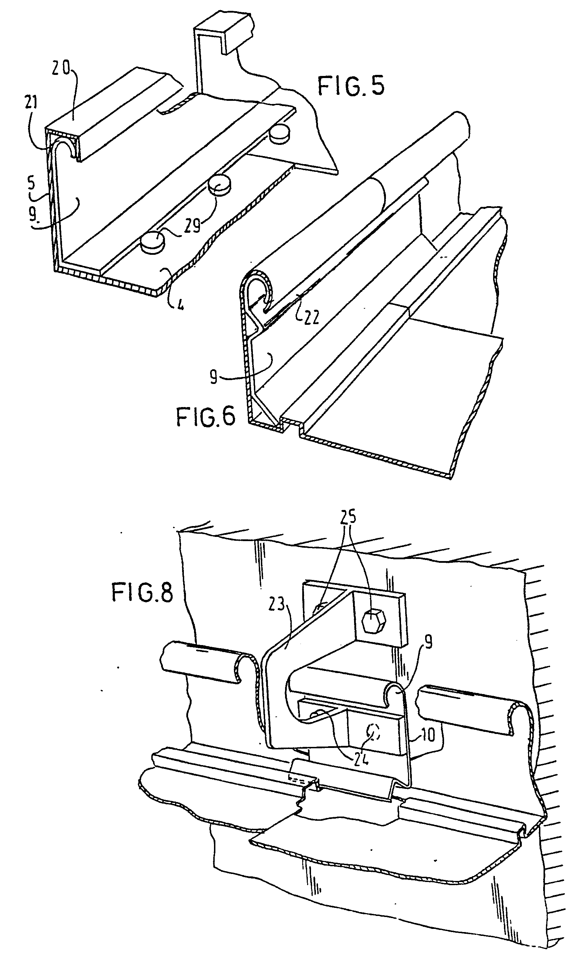

Figs. 5 and 6 show alternative forms of the connecting member 9.

Referring to Fig. 5 the connecting member is adapted to a rectangular, inwardly bent-over upper rim 20 of the sidewall 5 so that the long limb of the member 9 need only have a flange 21 bent over at right angles. The short limb is clamped tight behind burl-shaped stop members 29 on the bottom panel 4 of the gutter-shaped element.

Fig. 6 shows a connecting member 9, the long limb of which is provided with a stiffening rib 22 extending parallel to the upper rim.

The angle between the short and the long limb differs in this case from 90°.

Fig. 7 shows a connecting member having, like the preceding embodiments, an L-shaped part, the short limb 11 of which co-operates with a sequence of raised areas 30 pressed out of the bottom panel 4 of the element and the long limb of which gets at the sidewall 5. The long limb 10 is passed below and along the upper rim of the raceway element and extends into a mounting plate 30a for arranging welding boxes and the like. Since there is no need for passing bending load from one element to the other, it is sufficient to clamp the connecting member between the head edge of the flange 6 and the bottom panel 4. As a matter of course, the L-shaped part and the stops in the limb may be constructed in any suitable form.

Fig. 8 shows a connecting member 9 which can be arranged in the raceway in the same manner as the members described above, that is to say, in or below the bent-over upper rim of the gutter-shaped element. Previously, however, is fastened a console 23 by means of rivets 24 or the like, which has the advantage that the place of the member 9 or the console 23 respectively can be accurately determined with respect to bores drilled in the wall for the fastening bolts 25 by shifting the member 9 in the direction of length of the raceway. Neverthless, the construction embodying the invention guarantees firm fastening.

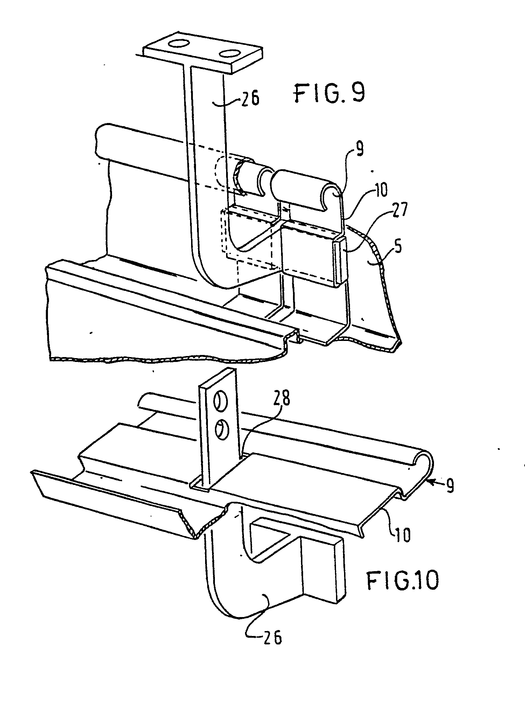

Fig. 9 shows a variant of the fastening mode of the console, in which the console is fastened by two connecting members 9 arranged side by side, the long limb 10 of which is inwardly bent over through a given distance. Below the limb 10 and between the outer wall 5 of the raceway can be clamped a flange 27 of the console 26.

Fig. 10 shows an embodiment in which the two connecting members of Fig. 9 are, in fact, combined to form a single unit and in which the inwardly bent-over part of the long limb 10 of the member 9 has a recess 28 for previously receiving a console 26 before they are together arranged in the raceway.

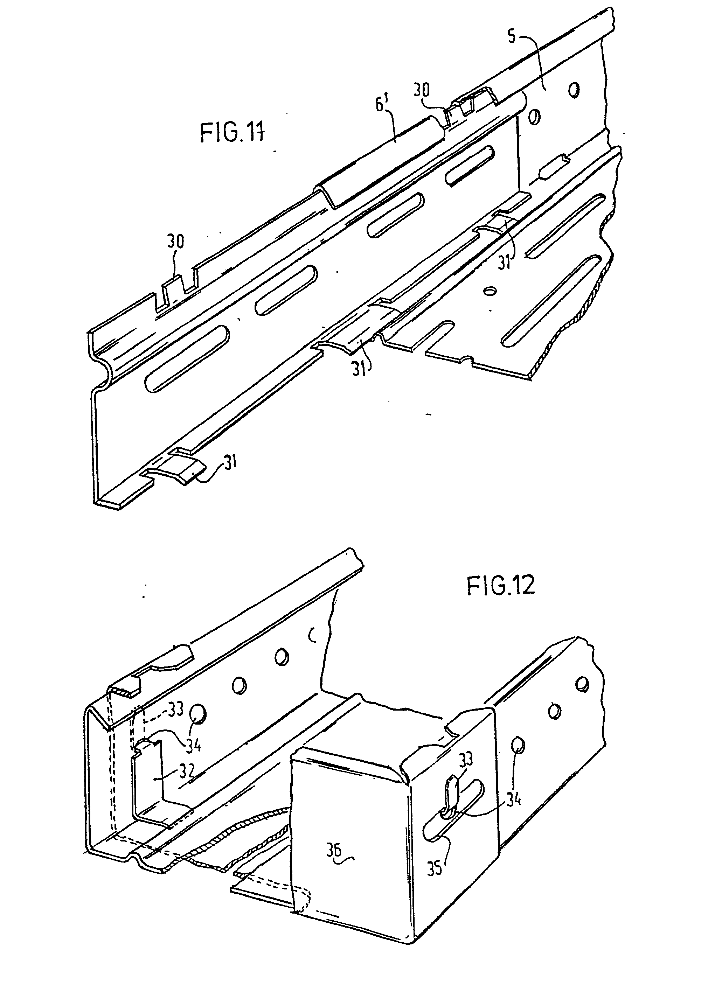

The raceway element of Fig. 11 has an upper rim 6' which adjoins the sidewall 5 at an acute angle. The connecting members having in this case the form of a plate of L-shaped cross-section has at the upper edge one or more tags 30 bent out of the plane and being firmly clamped with the remaining upper edge in the acute corners so that a high resistance against displacement in the direction of length is ensured.

The other limb of the connecting member is locally removed to form clamping tags 31 having the same function as the continuous limb 11 of the embodiments described above.

Fig. 12 shows a connecting member formed by an L-shaped strip 32, one limb of which terminates in a tag 33, which can be passed through one of a sequence of holes 34. With the holes 34 registers a hole 35 of an end piece 36 of the raceway so that the tag 33 grips around the outer side of the sidewall of the end piece 36 in order to establish a clamping joint. Such a clamping joint may, of course, also be used in other raceway elements than an end piece.

The invention is not limited to the embodiments described above.

## Claims

1. A raceway for cables, ducts or the like, comprising an assembly of abutting elements (1), each element (1) having at least one bottom panel (4) and upright sidewalls (5) adjoining said bottom panel (4) on both sides and having each integrated fastening means (6, 34), and one or more connecting members (9) adapted to be snapped inside said element, characterized in that the bottom panel (4) is provided with at least one stop member (8, 15, 17) located at a chosen distance from a side wall, said connecting member (9) being formed by substantially L-shaped blade, such that said connecting member (9) engages said fastening means (6, 6', 20, 34) of one of the side walls (5) and the stop member (8, 15, 17) in the bottom panel (4), one limb of the connecting member extending along the said one side wall, the other limb extending along the bottom panel.

2. A raceway as claimed in claim 1, characterized in that one limb of the L-shaped connecting member (9) is bent complementary to the upper edge (6) of the side wall (5).

3. A raceway as claimed in claim 1 and 2, characterized in that the upper edge (6) and one limb of the connecting member (9) have, in a cross-sectional view, the shape of an arc extending over more than 180°.

4. A raceway as claimed in claim 1—3, in which the upper edge (6') adjoins the side wall (5) at an acute angle, characterized in that the upper rim of one limb of the L-shaped connecting member (9) is provided with a tag (30) bent out of its plane.

5. A raceway as claimed in claim 1 and 2, in which the side wall is provided with a series of through-holes (34) characterized in that one limb of the L-shaped connecting member (32) has a tag (33) to be passed through a hole (34) of the side wall (5).

6. A raceway as claimed in any one of the preceding claims, characterized in that one limb has one or more ribs (19) extending parallel to the other limb.

7. A raceway as claimed in any one of the preceding claims, characterized in that the other limb has a kink (12).

8. A raceway as claimed in any one of the preceding claims, characterized in that the stop member is constructed in the form of a continuous ridge (7) bent out of the bottom panel (4).

## Revendications

1. Conduite ou caniveau pour câbles, tuyauteries ou analogues, comprenant un ensemble d'éléments (1) se placant bout à bout, chaque élément (1) présentant au moins un panneau de base (4) et des parois latérales dressées (5) qui se raccordent à ce panneau de base (4) sur l'un et l'autre côtés et qui présentent chacune des moyens intégrés de fixation (6, 34), et une ou plusieurs pièces de liaison (9) agencées de façon à être enclenchées à l'intérieur dudit élément, caractérisé(e) en ce que le panneau de base (4) est muni d'au moins une pièce de butée (8, 15, 17) disposée à une distance choisie à partir d'une paroi latérale, ladite pièce de liaison (9) étant formée par une lame en forme de L, de façon que ladite pièce de liaison (9) vienne au contact desdits moyens de fixation (6, 6', 20, 34) de l'une des parois latérales (5) et de la pièce de butée (8, 15, 17) se trouvant dans le panneau de base (4), une branche de la pièce de liaison s'étendant le long de ladite paroi latérale, l'autre branche s'étendant le long du panneau de base.

2. Conduite telle que revendiquée dans la revendication 1, caractérisée en ce qu'une branche de la pièce de liaison en forme de L (9) est pliée de manière complémentaire au bord supérieur (6) de la paroi latérale (5).

3. Conduite telle que revendiquée dans la revendication 1 et 2, caractérisée en ce que le bord supérieur (6) et une branche de la pièce de liaison (9) présentent, suivant une vue en coupe transversale, la forme d'un arc s'étendant sur plus de 180°.

4. Conduite telle que revendiquée dans la revendication 1—3, dans laquelle le bord supérieur (6') se raccorde à la paroi latérale (5) sous un angle aigu, caractérisée en ce que le bord supérieur d'une première branche de la pièce de liaison en forme de L (9) est munie d'une patte (30) repliée en dehors de son plan.

5. Conduite telle que revendiquée dans la revendication 1 et 2, dans laquelle la paroi latérale est transpercée d'une série de trous (34), caractérisée en ce qu'une première branche de la pièce de liaison en forme de L (32) présente une patte (33) qui doit traverser un trou (34) de la paroi latérale (5).

6. Conduite telle que revendiquée dans l'une quelconque des revendications précédentes, caractérisée en ce qu'une première branche présente une ou plusieurs nervures (19) s'étendant parallèlement.

7. Conduite telle que revendiquée dans l'une quelconque des revendications précédentes, caractérisée en ce que l'autre branche présente un coude (12).

8. Conduite telle que revendiquée dans l'une quelconque des revendications précédentes, caractérisée en ce que la pièce de butée est réalisée sous la forme d'une nervure continue (7) obtenue par pliage en dehors du plan du panneau de base (4).

## Patentansprüche

1. Installationskanal für Kabel, Leitungen oder dergleichen, bestehend aus einem Aufbau stumpf gegeneinander gefügter Elemente (1), wobei jedes Element (1) wenigstens eine Bodenplatte (4) und aufrechte Seitenwände (5) aufweist, die an die Bodenplatte (4) auf beiden Seiten anstoßen und je mit integrierten Befestigungsmitteln (6, 34) versehen sind, und wobei ein Verbindungsglied oder mehrere Verbindungsglieder (9) innerhalb des Elementes einschnappbar sind, dadurch gekennzeichnet, daß die Bodenplatte (4) mit wenigstens einem Anschlagglied (8, 15, 17) versehen ist, das in einem gewählten Abstand von einer Seitenwand angeordnet ist, wobei das Verbindungsglied (9) von einer im wesentlichen L-förmigen Platte gebildet ist, derart, daß das Verbindungsglied (9) an den Festlegemitteln (6, 6', 20, 34) an einer der Seitenwände (5) und an dem Anschlag (8, 15, 17) in der Bodenplatte (4) angreift und ein Schenkel des Verbindungsgliedes längs der Seitenwand verläuft, während der andere Schenkel längs der Bodenplatte verläuft.

2. Installationskanal nach Anspruch 1, dadurch gekennzeichnet, daß ein Schenkel des L-förmigen Verbindungsgliedes (9) komplementär zum oberen Rand (6) der Seitenwand (5) abgebogen ist.

3. Installationskanal nach den Ansprüchen 1 und 2, dadurch gekennzeichnet, daß der obere Rand (6) und ein Schenkel des Verbindungsgliedes (9) im Querschnitt die Form eines Bogens hat, der sich über mehr als 180° erstreckt.

4. Installationskanal nach den Ansprüchen 1 bis 3, bei welchem der obere Rand (6') an der Seitenwand (5) und einem spitzen Winkel anschließt, dadurch gekennzeichnet, daß der obere Rand des einen Schenkels des L-förmigen Verbindungsgliedes (9) mit einer aus seiner Ebene herausgebogenen Zunge (30) versehen ist.

5. Installationskanal nach den Ansprüchen 1 und 2, bei welchem die Seitenwand mit mehreren Durchgangslöchern (34) versehen ist, dadurch gekennzeichnet, daß ein Schenkel des L-förmigen Verbindungsgliedes (32) eine Zunge (33) aufweist, die durch ein Loch (34) der Seitenwand (5) einsteckbar ist.

6. Installationskanal nach einem der vorhergehenden Ansprüche, dadurch gekennzeichnet, daß ein Schenkel eine oder mehrere Rippen (19) aufweist, die parallel zu dem anderen Schenkel verlaufen.

7. Installationskanal nach einem der vorhergehenden Ansprüche, dadurch gekennzeichnet, daß der andere Schenkel einen Knick (12) aufweist.

8. Installationskanal nach einem der vorhergehenden Ansprüche, dadurch gekennzeichnet, daß der Anschlag die Gestalt einer durchgehenden Rippe (7) aufweist, die aus der Bodenplatte (6) abgebogen ist.

## FIG. 2

## FIG. 1

FIG. 7

30a

5

15

10

30

11

4

FIG.3

15

14

FIG.4

6

9

19

18

18

16

5

17

2

FIG.5

FIG.6

FIG.8

FIG. 9

FIG. 10

FIG.11

FIG.12